# EUROPÄISCHE PATENTSCHRIFT

(11) **EP 2 985 179 B1**
(45) Veröffentlichungstag und Bekanntmachung des Hinweises auf die Patenterteilung: **23.10.2019**
(21) Anmeldenummer: 15002231.7
(22) Anmeldetag: 28.07.2015
(51) Int. Cl.: B60N 2/54, B60N 2/02, B60N 2/427, B60N 2/68, B60N 2/70

(54) **SITZWANNE FÜR EINEN FAHRZEUGSITZ UND FAHRZEUGSITZ**
SEAT PAN FOR A VEHICLE SEAT AND VEHICLE SEAT
BAQUET DE SIEGE POUR UN SIEGE DE VEHICULE ET SIEGE DE VEHICULE

(30) Priorität: 12.08.2014 DE 102014111486
(43) Veröffentlichungstag der Anmeldung: 17.02.2016
(73) Patentinhaber: Faurecia Autositze GmbH, 31655 Stadthagen (DE)
(72) Erfinder: Römer, Bernd, 31655 Stadthagen (DE)
(74) Vertreter: Seewald, Jürgen

(56) Entgegenhaltungen:
- EP-A2- 0 372 338
- DE-A1- 2 952 499
- DE-A1-102009 040 901
- FR-A1- 2 813 826
- US-A- 4 189 180
- US-A1- 2012 187 740

## Beschreibung

Die Erfindung betrifft eine Sitzwanne für einen Fahrzeugsitz und einen derartigen Fahrzeugsitz.

Die Fahrzeugsitze weisen im Allgemeinen ein z. B. auf einer längsverstellbaren Oberschiene befestigtes Sitzgestell und eine an dem Sitzgestell befestigte Sitzwanne auf, wobei das Sitzgestell z. B. höhenverstellbar ist. Auf der Sitzwanne können z. B. Polster und Komforteinrichtungen wie eine Sitzwannenheizung und Massageeinrichtungen, angebracht werden.

Hierbei sind sowohl fest auf dem Sitzgestell anzubringende Sitzwannen als auch gegenüber dem Sitzgestell verstellbare Sitzwannen, insbesondere neigungsverstellbare Sitzwannen zur Verbesserung des Sitzkomforts, bekannt. Die Sitzwanne ist im Allgemeinen zur Ausbildung einer hohen Crashsicherheit hinreichend steif ausgebildet; sie kann z. B. durch Seitenprofile und die Seitenprofile verbindende Querrohre ausgebildet sein, wodurch eine hohe Steifigkeit erzeugt wird.

Die EP 2 666 663 A1 beschreibt eine Sitzwanne bzw, Sitzschale, die als durchgängiges Kunststoffteil mit einer Vielzahl von Schlitzen ausgebildet ist und von oben auf eine Sitzkissenstruktur aufgesetzt wird.

Die DE 10 2009 040 901 A1 beschreibt eine Sitzwanne bzw. Sitzschale, die aus einem glasfaser-verstärkten plastischen Material ausgebildet ist, wobei sie eine durchgängige Sitzfläche mit einer auf der Unterseite versehenen Fächerstruktur aus Rippen zur Verstärkung aufweist.

Derartige Sitzwannenkonstruktionen sind jedoch relativ schwer bzw. mit hohem Materialaufwand auszubilden, damit sie eine hinreichende Festigkeit und Steifigkeit bei hohem Sitzkomfort aufweisen.

In EP 0 372 338 A2 sowie in FR 2 813 826 A1 ist jeweils eine Sitzwanne beschrieben, die eine Profilstruktur aus mehreren Profilen sowie Querträger-Aufnahmen aufweisen, so dass die Sitzwanne auf Querträgern des Fahrzeugsitzes aufgesetzt werden kann.

US 4,189,180 beschreibt einen Fahrzeugsitz, bei dem das Gestell der Sitzwanne und der Rückenlehne aus einem gitterartigen Rahmen bestehen. DE 29 52 499 beschreibt ebenfalls eine Sitzwanne, die mehrere Durchbrüche bzw. Durchgangslöcher aufweist zum Erhöhen der Nachgiebigkeit schwer belasteter Zonen. In US 2012/0187740 A1 ist eine Sitzwanne gezeigt, bei der zum besseren Kühlen und Belüften in der Fläche gitterartig Löcher angeordnet sind. DE 10 2009 040 901 A1 beschreibt eine Sitzwanne mit mehreren Profilen und zwischen den Profilen ausgebildeten Durchgangslöchern, an die eine federnde Kunststoffmatte angeformt ist.

Der Erfindung liegt die Aufgabe zugrunde, eine Sitzwanne für einen Fahrzeugsitz zu schaffen, die mit relativ geringem Aufwand ausbildbar ist und eine hohe Sicherheit gewährleistet.

Diese Aufgabe wird durch eine Sitzwanne nach Anspruch 1 und eine Sitzteil-Anordnung nach Anspruch 15 gelöst. Die Unteransprüche beschreiben bevorzugte Weiterbildungen.

Erfindungsgemäß weist die Sitzwanne somit eine Profilstruktur auf; vorteilhafterweise ist sie vollständig als Profilstruktur ausgebildet, wobei vorteilhafterweise zwischen den einzelnen Profilen Durchgangslöcher ausgebildet sind. Die Profile können sich hierbei z. B. kreuzen oder ineinander übergehen.

Die Profilstruktur wird durch die Formgebung der Profilquerschnitte, insbesondere in vertikaler Richtung, z. B. als T, U, Doppel-T- oder Z-Profil, erheblich in ihrer Steifigkeit erhöht.

So ist eine leichte und kostengünstige, wenig Material erfordernde Ausbildung möglich. Die Sitzwanne ist zum Aufsetzen auf ein Sitzgestell

Vorteilhafterweise wird lediglich eine Profilstruktur statt vollständiger Sitzschalen-Flächen ausgebildet wird. Hier wird erfindungsgemäß erkannt, dass eine derartige Profilstruktur zur Aufnahme eines Polsters bzw. Schaumstoffkörpers ausreichend ist.

Ein besonderer Vorteil der erfindungsgemäßen Ausbildung liegt in der Eignung, spezifische Belastungen bei geringem Gewicht bzw. geringer Masse aufzunehmen.

Eine relevante erste Belastung ist die Crashsicherheit bei einem Front-Crash, bei der der Sitzinsasse mitsamt Sitzwanne nach vorne beschleunigt wird. Somit ist die Sitzwanne hier hohen Belastungen ausgesetzt. Indem erfindungsgemäß die Sitzwanne als Profilstruktur ausgebildet ist, um in einen Querträger des Sitzgestells, insbesondere ein Querrohr eingehängt bzw. aufgesetzt oder eingeclipst zu werden, ist sie von vornherein darauf ausgebildet, dass sie diese Belastungen bei einem Frontcrash nicht alleine trägt.

Hierbei wird erfindungsgemäß erkannt, dass es vorteilhaft ist, die Sitzwanne auf die Belastungen des Querträgers auszurichten und somit doppelte Steifigkeiten bzw. doppelte Strukturen zum Abfangen der Belastungen zu vermeiden; es wird erkannt, dass das Querrohr des Sitzgestells bei dem Front- Crash in seinem mittleren Bereich nach vorne bzw. nach vorne und unten durchbiegt, wobei es an seinen seitlichen Anbindungen an den weiteren Teilen des Sitzgestells, insbesondere den Längsträgern bzw. Längsprofilen des Sitzprofils gehalten wird. Die Sitzwanne kann diese Bewegung mit vollziehen; indem sie als Profilstruktur ausgebildet ist, hat sie eine geeignete Verformungsreserve bzw. Weichigkeit und dennoch hinreichende Steifigkeit, so dass sie mit dem durchbiegenden Querrohr nachgibt. Die Sitzwanne passt sich in der Verformbarkeit somit dem Querrohr an. Somit zerbricht die Sitzwanne auch nicht, wie es bei einer fehlenden Nachgiebigkeit bzw. höheren Steifigkeit im Falle des durchbiegenden Querrohrs auftreten könnte.

Die Sitzwanne ist vorteilhafterweise in ihrem (auf die Querrichtung bezogen) mittleren Bereich besonders biegeweich, z. B. durch eine Materialeinsparung, insbesondere eine Materialeinsparung in vertikaler Richtung, oder auch durch einen geeignet weichen Profilquerschnitt, so dass die Sitzwanne bei einem Frontcrash mit dem Querrohr nachgeben kann. Hierdurch wird vorteilhafterweise die Stabilität bei der vertikalen Belastung, insbesondere im Kniefall, nicht beeinträchtigt.

Somit wird eine redundante Steifigkeit gegen die Belastungen bei einem Front-Crash vermieden.

Hierzu ist die Sitzwanne vorteilhafterweise formschlüssig bzw. einrastend durch an ihrer Unterseite ausgebildete, nach unten offene bzw. halboffene Rohraufnahmen auf ein vorderes Querrohr des Sitzgestells aufgesetzt. Die Rohraufnahmen können z. B. an der Unterseite von in Längsrichtung verlaufenden Längsprofilen ausgebildet sein, und ermöglichen z. B. ein Einclipsen bzw. ein lösbares Einrasten in das vordere Querrohr.
Das Querrohr kann somit durch Einclipsen oder Einrasten aufgenommen werden; es kann jedoch auch in die Profilstruktur mit eingespritzt werden.

Eine weitere Belastung der Sitzwanne ist eine unsachgemäße, punktuelle oder bereichsweise Belastung des Sitzinsassen, der sich auf der Sitzwanne abstützt. Diese Belastung ist insbesondere eine sog. "Kniebelastung", bei der der Benutzer sich mit einem Knie auf der Sitzwanne abstützt, z. B. um die Kopfstütze einzustellen oder im Fahrzeug etwas nach hinten zu reichen. Hierbei können z. B. auch größere Belastungen auftreten, wenn der Sitzinsasse z. B. einem auf einer hinteren Sitzbank sitzenden Passagier, z. B. einem Kind, etwas reichen oder eine Einstellung an dessen Sitz vornehmen will. Der Benutzer stützt somit gegebenenfalls sein gesamtes Gewicht mit seinem Knie auf der Sitzwanne, z. B. in einem vorderen Bereich der Sitzwanne ab, was zu einer hohen punktuellen oder bereichsweisen Belastung führt.

Derartigen Belastungen der Sitzwanne werden als Belastungen um die Querachse von der Profilstruktur abgefangen, die insbesondere gegenüber derartigen vertikalen Belastungen steif ausgebildet ist; sie kann die Belastungen insbesondere mit ihrem umlaufenden äußeren, verstärkenden Umlaufprofil, die Belastung somit abfangen.

Die Sitzwanne kann vollständig aus Kunststoff, insbesondere als Spritzgussteil, ausgebildet sein, d.h. insbesondere auch ohne tragende metallische Strukturteile; weiterhin kann jedoch auch z. B. der Umfangsbügel einen metallischen Träger aufweisen, der insbesondere eingespritzt ist. Vorteilhafterweise weist die Sitzwanne auf ihrer Oberseite nicht eine durchgängige Fläche auf, sondern stellt lediglich eine Profilstruktur dar, wobei erfindungsgemäß zwischen den Profilen entsprechend Durchgangslöcher ausgebildet sind.

Die einzelnen Profile sind vorteilhafterweise jeweils mit einem zur Versteifung dienenden Profilquerschnitt, insbesondere als T-Profil, Doppel-T (I-Profil), Z- oder U-Profil ausgebildet. So ist insbesondere ein äußeres Umfangsprofil ganz oder zumindest bereichsweise als U-Profil oder Z-Profil ausgebildet, das vorteilhafterweise nach unten offen ist, so dass die Sitzwanne mit ihrem äußeren Umfangsprofil von oben in Strukturteile, z. B. äußere Seitenprofile des Sitzgestells, aufgesetzt werden kann. Die Längsprofile und zumindest die vorderen Querprofile können z. B. als T-Profil, I-Profil oder Z-Profil ausgebildet sein; ein hinteres Querprofil ist vorteilhafterweise dicker ausgebildet und geht an seinem Ende in seitliche Schenkelbereiche der äußeren Umfangsprofile über. Hierdurch wird bei geringem Gewicht eine hohe Festigkeit durch eine gestellartige Profilstruktur der Sitzwanne erreicht.

Die auf dem Sitzgestell zu montierende Sitzteil-Anordnung weist vorteilhafterweise zusätzlich zu der Sitzwanne eine Unterfederung mit mehreren Federn und einer hinteren Unterfederungs-Befestigung auf. Die Federn der Unterfederung können somit zwischen einem hinteren Ende der Sitzwanne und der Unterfederungs-Befestigung angebracht sein.

Die Unterfederungs-Befestigung ist z. B. mit nach unten offenen bzw. halboffenen vorderen Rohraufnahmen auf ein vorderes Querrohr des Sitzgestells aufgesetzt und eingeclipst.

Hierbei sind für verstellbare und nicht verstellbare Sitzwannen unterschiedliche Ausbildungen möglich. Bei Ausbildung einer nicht verstellbaren bzw. festen Sitzwanne ist grundsätzlich keine starre Verbindung zwischen der Sitzwanne und der hinteren Unterfederungs-Befestigung erforderlich, so dass diese voneinander getrennt bzw. lediglich über die Federn der Unterfederung verbunden sind und jeweils für sich an dem Sitzgestell, z. B. in hinteren Querprofilen, angebracht bzw. eingehängt werden können.

Bei Ausbildung einer gegenüber dem Sitzgestell verstellbaren, z. B. im vorderen Bereich schwenkbaren Sitzwanne ist diese vorzugsweise mit der hinteren Unterfederungs-Befestigung starr verbunden, z. B. durch Ausbildung als einteiliges Kunststoffteil, insbesondere Spritzgussteil. Somit kann die Sitzwanne mit der Unterfederungs-Befestigung einteilig ausgebildet sein, z. B. als Profilstruktur, wobei die Federn der Unterfederung in diese Struktur eingehängt sind. Zur Verstellung kann z. B. eine manuelle Verstellvorrichtung oder eine motorische Verstellvorrichtung vorgesehen sein, z. B. an der Unterseite der Sitzwanne, z. B. mit einer Exzenterverstellung, wie sie als solche für Sitzwannenverstellungen bekannt sind.

Die Sitzwannenfedern erstrecken sich somit in Längsrichtung zwischen der Sitzwanne und der hinteren Unterfederungs-Befestigung. Sie können an ihren Enden in das Kunststoffmaterial der hinteren Unterfederungs-Befestigung eingespritzt sein. Alternativ zum Einspritzen der Sitzwannenfedern können diese auch jeweils eingehängt sein.

Die Sitzwannenfedern können sich insbesondere mäanderartig bzw. mit Verformungsreserve erstrecken. Um ein seitliches Verschieben bei Belastung zu vermeiden, sind sie vorteilhafterweise durch Querverbindungen relativ zueinander festgelegt; die Querverbindungen können z. B. verstellbar an den Sitzwannenfedern angebrachte, sich in Querrichtung erstreckende Stäbe sein, z. B. wiederum aus Kunststoffmaterial. Die Querverbindungen sind vorteilhafterweise nicht mit der Sitzwanne verbunden und können somit mit einfedern, wobei sie lediglich die Querabstände zwischen den Federn der Unterfederung sichern und somit ein Einfedern nicht behindern. Durch die metallischen Unterfederungs-Federn werden eine hohe Elastizität und ein hoher Sitzkomfort gewährleistet.

Die Erfindung wird im Folgenden anhand der beiliegenden Zeichnungen an einigen Ausführungsformen näher erläutert. Es zeigen:
- Fig. 1: eine Sitzteil-Anordnung gemäß einer ersten Ausführungsform für eine starre Anbindung an einem Sitzgestell in perspektivischer Ansicht;
- Fig. 2: eine Aufsicht auf die Sitzteil-Anordnung von Fig. 1;
- Fig. 3: eine Seitenansicht der Sitzteil-Anordnung aus Fig. 1 und 2;
- Fig. 4: die Sitzteil-Anordnung der Ausführungsform von Fig. 1 bis 3 bei Anbringung an einem Sitzgestell;
- Fig. 5: das Sitzgestell eines Fahrzeugsitzes zur Aufnahme der Sitzteil-Anordnung aus Fig. 1-4;
- Fig. 6: eine Sitzteil-Anordnung gemäß einer weiteren Ausführungsform für eine schwenkbare Anbindung an ein Sitzgestell in perspektivischer Ansicht;
- Fig. 7: eine Seitenansicht bei Aufnahme der Sitzwanne auf einem Sitzgestell, und
- Fig. 8: eine Aufsicht auf eine Sitzteil-Anordnung gemäß einer weiteren Ausführungsform.

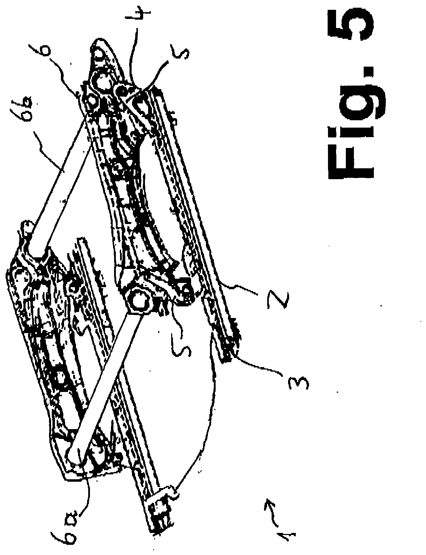

Ein Fahrzeugsitz 1 weist gemäß Fig. 5 eine am Fahrzeug, z. B. am Fahrzeugchassis anzubringende Unterschiene 2 und eine in der Unterschiene 2 längsverstellbar aufgenommene Oberschiene 3 auf, an der ein Sitzgestell 4 angebracht ist, das insbesondere eine Höhenverstellung ermöglicht, z. B. durch einen Höhenverstellmechanismus mit Schwingen 5. Das Sitzgestell 4 weist in seinem oberen Bereich sich in Längsrichtung erstreckende Seitenprofile 6c, 6d sowie ein vorderes Querrohr 6a und ein hinteres Querrohr 6b auf, die zwischen den Seitenprofilen 6c, 6d aufgenommen sind. Die Seitenprofile 6c, 6d mit den Querrohren 6a und 6b sind somit als Teil des Sitzgestells 4 gegenüber den Oberschienen 3 höhenverstellbar.

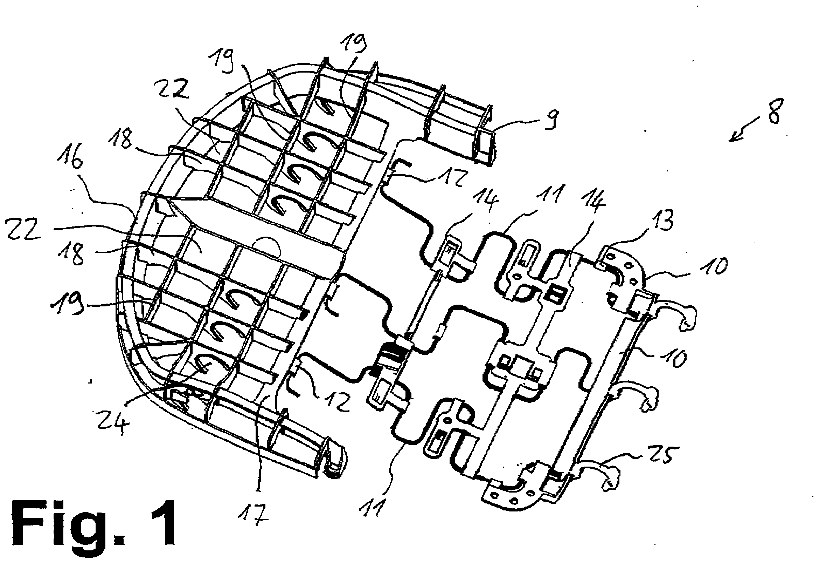

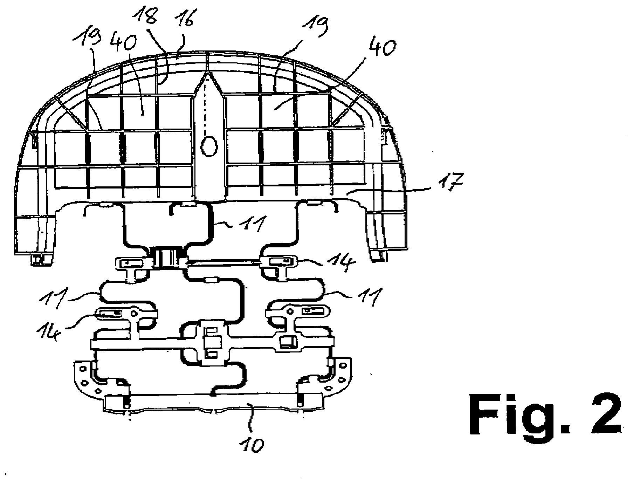

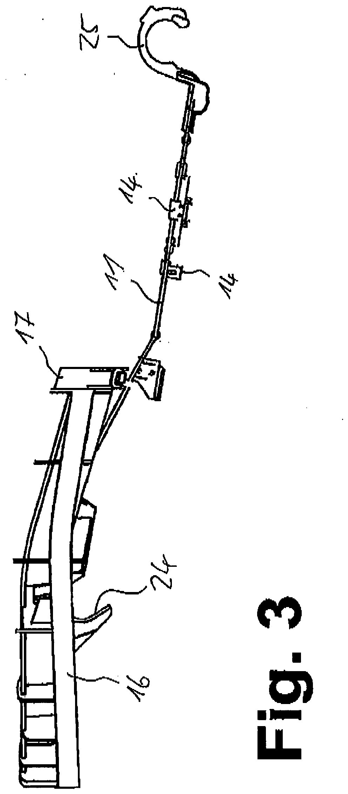

Eine in Fig. 1 bis 3 gezeigte Sitzteil- Anordnung 8 weist eine Sitzwanne 9 und eine Unterfederung 3 auf, wobei die Unterfederung 3 wiederum eine Unterfederungs- Befestigung 10 und zwischen der Sitzwanne 9 und der Unterfederungs- Befestigung 10 angebrachte, sich in Längsrichtung erstreckende Unterfederungs-Federn 11 aufweist.

Die Sitzteil- Anordnung 8 ist an den Querrohren 6a, 6b und den Seitenprofilen 6c, 6d aufgenommen und wird somit durch das Sitzgestell 4 in der Höhe verstellt.

Die Unterfederungs-Federn 11 sind z. B. als mäanderartig bzw. mit Verformungsreserve ausgebildete Drähten, z. B. Stahldrähte ausgebildet; sie sind jeweils mit ihrem vorderen Ende in einer vorderen Federaufnahme 12 der Sitzwanne 9 eingehängt und mit ihrem hinteren Ende in hinteren Federaufnahmen 13 der Unterfederungs-Befestigung 10 eingehängt. Zur Querstabilisierung der drei mäanderartigen, die Verformungsreserve aufweisenden Unterfederungs-Federn 11 sind Abstandshalter (Federhalter) 14 vorgesehen; sie dienen dazu, ein seitliches Ausweichen der Sitzwannenfedern 11 bei Belastung zu verhindern und somit die Querposition der Sitzwannenfedern 11 auch bei unterschiedlichen Belastungszuständen zu gewährleisten.

Die Sitzwanne 9 ist als Spritzgussteil aus einem für ein Spritzgussverfahren geeigneten Kunststoffmaterial gefertigt. Hierbei ist die Sitzwanne 9 als Profilstruktur mit mehreren Profilen 16, 17, 18, 19 ausgebildet, die sich z. B. kreuzen und/oder ineinander übergehen können. Zwischen den Profilen 16, 17, 18, 19 sind vorteilhafterweise Durchgangslöcher 22 ausgebildet, die in vertikaler Richtung bzw. Z-Richtung durchgängig sind.

Die Profilstruktur weist vorteilhafterweise ausschließlich die Profile 16, 17, 18, 19 auf, so dass kein Flächenmaterial die Durchgangslöcher 22 bedeckt.

Auch die Unterfederungs-Befestigung 10 kann als Kunststoff- Spritzgussteil ausgebildet sein. Die als Querverbindungen dienenden Federhalter 14 können als Kunststoffteile oder auch als Metallteile ausgebildet sein.

Gemäß der gezeigten Ausführungsform sind die Unterfederungs-Federn 11 in die Sitzwanne 9 eingehängt; sie können jedoch auch in das Kunststoffmaterial der Sitzwanne 9 eingespritzt sein. Auch die Befestigung der Unterfederungs-Federn 11 an den Federhaltern (Querverbindungen) 14 und der Unterfederungs-Befestigung 10 kann als mechanische Aufnahme bzw. durch Einhängen oder auch durch Einspritzen erfolgen.

Gemäß der gezeigten Ausbildung weist die Profilstruktur der Sitzwanne 9 auf:
ein äußeres Umfangsprofil 16, das einen Abschluss der Sitzwanne 9 nach vorne und zu den Seiten hin bildet, ein zur Anbindung der Unterfederungs-Federn 11 dienendes hinteres Querprofil 17, das zwischen den beiden äußeren Schenkeln des bügelförmigen äußeren Umfangsprofils 16 verläuft, weiterhin zwischen dem äußeren Umfangsprofil 16 und dem hinteren Querprofil 17 verlaufende Längsprofile 18, und im Wesentlichen parallel zum hinteren Querprofil 17 verlaufende weitere Querprofile 19, wobei sich die weiteren Querprofile 19 und die Längsprofile 18 bei dieser Ausführungsform schneiden, so dass eine Fachwerkstruktur ausgebildet wird. Zur Aufnahme des vorderen Querrohrs 6a sind z. B. in den Längsprofilen 18 Rohraufnahmen 24 ausgebildet, insbesondere als nach unten oder schräg nach unten offene, kreisförmige Öffnungen, in die das vordere Querrohr 6a eingeclipst werden kann. An der Unterfederungs-Befestigung 10 sind entsprechend hintere Rohraufnahmen 25 ausgebildet, hier als nach hinten verlaufende, gekrümmte Bügel, die wiederum nach unten offen sind, zur Aufnahme des hinteren Querrohrs 6b.

Die Profilstruktur-Ausbildung der Sitzwanne 9 als Spritzgussteil ist sehr materialsparend, leicht und kostengünstig; auch die Ausbildung der gesamten Sitzteil-Anordnung 8 ist materialsparend, da die Sitzwanne 9 und die Unterfederungs-Befestigung 10 nicht miteinander starr verbunden sind.

Die Profile 16, 17, 18 und 19 können im Schnitt insbesondere als Z-, T- oder U-Profil ausgebildet sein und hierdurch an ihrer Oberseite jeweils eine gewisse Verbreiterung aufweisen, um eine hinreichend flächige Auflage für ein aufzunehmendes Sitzpolster auszubilden.

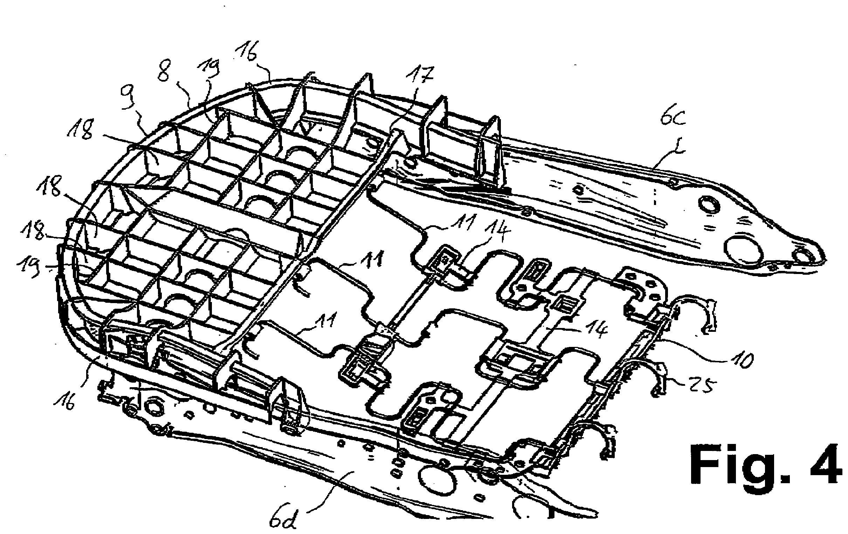

Die einzelnen Profile können je nach Belastung geeignet in ihrer Formbildung ausgestaltet werden:
So kann ein äußeres Umfangsprofil 16 als nach unten offenes U-Profil oder Z-Profil ausgebildet werden, so dass die beiden seitlichen Schenkelbereiche des äußeren Umfangsprofils 16 in die Seitenprofile 6c, 6d des Sitzgestells 4 eingedrückt bzw. aufgesetzt werden können, wie insbesondere aus Fig. 4 ersichtlich ist. Ein U-Profil, ggf. auch ein V-Profil, mit nach unten offener Ausrichtung ermöglicht somit eine hohe Biegesteifigkeit, und weiterhin eine Aufnahme durch Aufsetzen von oben, und weiterhin nach oben hin eine hohe Auflagefläche für ein Sitzpolster.

Die anderen Profile 17, 18 und 19 können wiederum mit hoher Steifigkeit und weiteren, geeigneten Eigenschaften ausgebildet werden. Ein L-Profil mit nach oben weisendem Querschenkel (umgedrehtes L), ein T-Profil und ein Z-Profil weisen wiederum eine hohe Auflagefläche auf ihrer Oberseite bei geeigneter Biegesteifigkeit auf. Ein I-Profil mit senkrecht verlaufendem Steg dient entsprechend zur Verstärkung. Ein V-Profil ermöglicht eine hohe Biegeweichigkeit. Ein Z-Profil ist insbesondere mit senkrechtem mittleren Steg vorgesehen, insbesondere in den äußeren Bögen der Sitzwanne 9.

Zwischen dem bogenförmigen bzw. bügelförmigen Umfangsprofil 16 und den inneren Profilen, insbesondere dem in Längsrichtung verlaufenden Längsprofilen 18 und den in Querrichtung verlaufenden Querprofilen 19 ist vorteilhafterweise ein biegeweicher Bereich 40 ausgebildet, der z. B. jeweils nach innen an das Umfangsprofil 16 angrenzt. Der biegeweiche Bereich 40 kann somit insbesondere durch ein V-Profil oder ein liegendes I-Profil, das somit in seinem mittleren horizontal verläuft, und/oder z. B. durch eine Materialschwächung in vertikaler Richtung ausgebildet sein und insbesondere als Fließgelenk wirken.

Im Falle eines Front-Crashes wird der Sitzinsasse mit der Sitzwanne 9 nach vorne beschleunigt. Das vordere Querrohr 6a ist seitlich in den Seitenprofilen 6c, 6d des Sitzgestells 4 fest aufgenommen, z. B. formschlüssig eingesetzt und verschweißt, so dass es sich hier nicht löst. Das Querrohr 6a biegt daher bei der hohen Längsbelastung in seinem mittleren Bereich aufgrund der Trägheit der Masse des Körpers und der Sitzwanne 9 nach vorne durch, wobei die gesamte Sitzwanne 9 sich ebenfalls derartig deformiert, dass die Rohraufnahmen 24 an dem vorderen Querrohr 6a verbleiben und entsprechend die Verformbewegung des vorderen Querrohrs 6a mit vollziehen. Der biegeweiche Bereich 40 innerhalb des Umfangsprofils 16 gibt somit nach; das Umfangsprofil 16 bleibt in dem Sitzgestell 6, insbesondere auf den Seitenprofilen 6c, 6d, fest aufgenommen.

Somit ermöglicht die deformierbare Sitzwanne 9 die feste Aufnahme des vorderen Querrohrs 6a auch während eines Front-Crashes, und löst sich weder vom Querrohr 6a noch von den Seitenprofilen 6c, 6d.

Hingegen wirkt die Profilausbildung bei einer punktuellen Belastung der Sitzwanne 9 von oben, insbesondere an in einem Bereich in Längsrichtung vor dem Querrohr 6a, hinreichend steif, so dass hier keine bzw. keine bleibenden Verformungen auftreten. Somit kann insbesondere eine Kniebelastung, bei der ein Benutzer mit einem Knie auf der Sitzwanne 9 punktuell ruht und sich z. B. im Fahrzeug nach hinten zu einer hinteren Sitzreihe beugt, von den Profilen, insbesondere dem Umfangsprofil 16, den Längsprofilen 18 und den Querprofilen 19 aufgenommen werden. Eine derartige Belastung stellt somit eine Biegebelastung um das Querrohr 6a dar, die hier problemlos aufgefangen werden kann; das Umfangsprofil 16 bleibt weiter in den Seitenprofilen 6c, 6d eingesetzt, und die hinreichend steifen Querprofile 19 und Längsprofile 18 nehmen die Belastung auf.

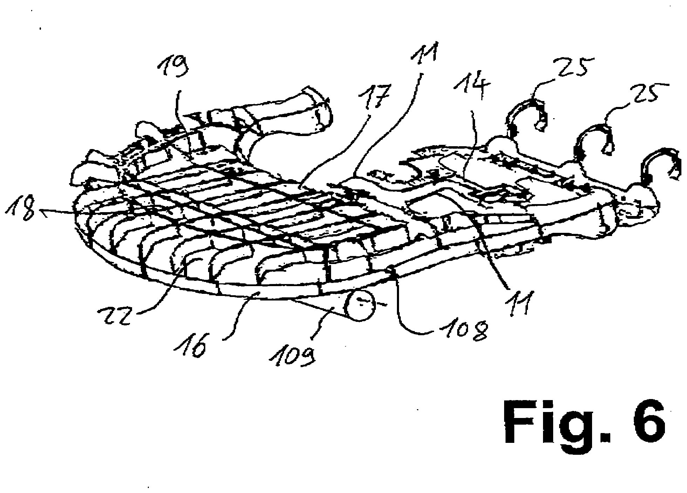

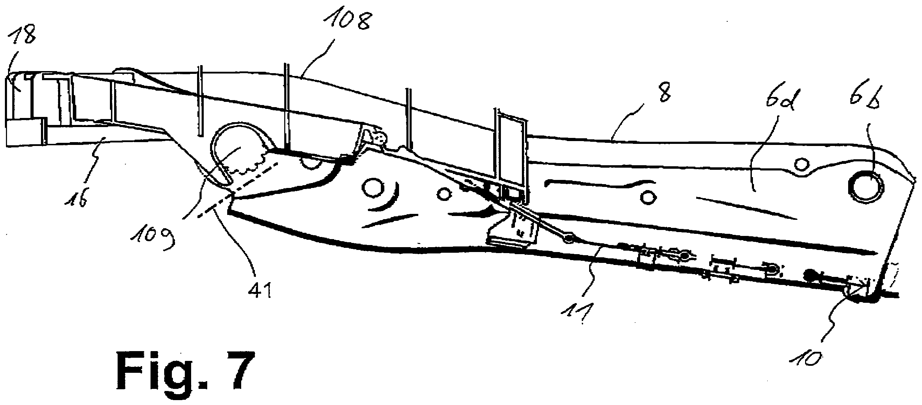

Gemäß der Ausführungsform der Fig. 1 ist die Sitzwanne 9 getrennt von den weiteren Elementen der Sitzteil-Anordnung 8 ausgebaut. Die Ausführungsform der Fig. 6 und 7 zeigt eine einteilige Sitzteil-Anordnung 108, die eine Verstellung der Sitzwanne 9 gegenüber dem Sitzgestell 4 ermöglicht. Hierbei kann die Sitzwanne 9 insbesondere gegenüber dem Sitzgestell 4 schwenkbar sein; hierdurch wird eine bessere Komforteinstellung für Benutzer erreicht: Es ist eine Neigungsverstellung der Sitzteil-Anordnung 108 mit aufgenommenem Polster möglich, zusätzlich zu der Höhenverstellung durch das Sitzgestell 4. Die Sitzteil-Anordnung 108 kann hierbei insbesondere wiederum fest an dem hinteren Querrohr 6b eingehängt sein. Die Sitzwanne 9 kann somit geschwenkt werden, wodurch ihre Höhe und Neigung geändert werden kann. Hierzu kann eine manuelle Schwenkvorrichtung, z. B. zur Bedienung mittels eines Hebels oder eines Exzenters, oder auch eine motorische Schwenkvorrichtung 109 vorgesehen sein, wie z. B. in Fig. 7 gezeigt mit einem Exzenter, der an dem Sitzgestell 4 anzubringen ist und eine Höhenverstellung der Sitzwanne 9 ermöglicht.

Die Sitzwanne 108 dieser Ausführungsform, aber auch die Sitzwanne 8 gemäß der Ausführungsform der Fig. 1 bis 4 kann ergänzend gegen ein Abheben nach oben gesichert sein, hier durch eine Sicherung 41 unterhalb des Exzenters der motorischen Schwenkvorrichtung 109, die z. B. eine Schraube oder ein Sicherheitsbolzen sein kann.

Somit ist bei dieser Ausführungsform die Sitzteil-Anordnung 108 z. B. als einteilige Profilstruktur ausgebildet.

Somit kann das Querrohr 6a gegenüber weiteren Teilen des Sitzgestells durch die motorische Schwenkvorrichtung 9 oder eine manuelle Schwenkvorrichtung verstellt werden.

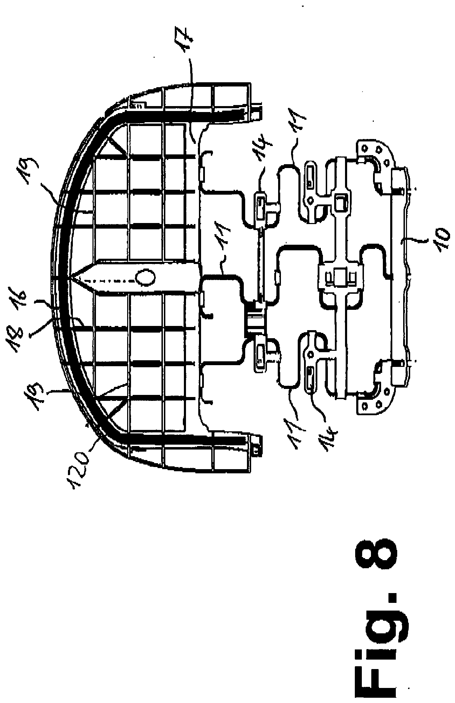

Fig. 8 zeigt eine weitere Ausführungsform, bei der in dem Umfangsprofil 16 ein metallischer Träger 120 aufgenommen, insbesondere eingespritzt ist. So wird kostengünstig eine Profilstruktur mit hoher Tragkraft erreicht.

## Patentansprüche

1. Sitzwanne (9) zur Befestigung an einem Sitzgestell (4) eines Fahrzeugsitzes (1), wobei die Sitzwanne (9) eine Profilstruktur aus mehreren Profilen (16, 17, 18, 19) aufweist,
wobei die Sitzwanne (9) auf ihrer Unterseite Querträger-Aufnahmen (24) zum Aufsetzen auf einen sich in Querrichtung (Y) erstreckenden Querträger (6a) aufweisen,
**dadurch gekennzeichnet, dass**
zwischen den Profilen (16, 17, 18, 19) Durchgangslöcher (22) ausgebildet sind, die sich in vertikaler Richtung durch die Profilstruktur erstrecken, und
die Sitzwanne (9) ein hinteres Querprofil (17) aufweist, an dem vordere Federanbindungen (12) zur Aufnahme von Unterfederungs-Federn (11) ausgebildet sind.

2. Sitzwanne (9) nach Anspruch 1, **dadurch gekennzeichnet, dass** sie aus einem Kunststoffmaterial spritzgegossen ist.

3. Sitzwanne (9) nach Anspruch 1 oder 2, **dadurch gekennzeichnet, dass** zwischen allen Profilen (16, 17, 18, 19) Durchgangslöcher (22) ausgebildet sind, die sich in vertikaler Richtung durch die Profilstruktur erstrecken.

4. Sitzwanne (9) nach Anspruch 3, **dadurch gekennzeichnet, dass** die Profilstruktur ausschließlich aus Profilen (16, 17, 18, 19) und zwischen den Profilen ausgebildeten Durchgangslöchern (22) ausgebildet ist.

5. Sitzwanne (9) nach einem der vorherigen Ansprüche, **dadurch gekennzeichnet, dass** die Querträger-Aufnahmen Rohraufnahmen (24) sind zur Aufnahme eines sich in Querrichtung erstreckenden Querrohrs (6a) des Sitzgestells (4), wobei die Rohraufnahmen (24) nach unten offen, vorzugsweise maulartig offenen, ausgebildet sind, zum Aufstecken auf das Querrohr (6a).

6. Sitzwanne (9) nach Anspruch 5, **dadurch gekennzeichnet, dass** die Rohraufnahmen (24) zur einrastenden oder einclipsenden Befestigung an dem vorderen Querrohr (6a) ausgebildet sind.

7. Sitzwanne (9) nach einem der vorherigen Ansprüche, **dadurch gekennzeichnet, dass** ein Umfangsprofil (16) die Sitzwanne (9) zu drei Seiten umgibt und zum Aufsetzen auf Seitenprofile (6c, 6d) des Sitzgestells (4) ausgebildet ist,
wobei das Umfangsprofil (16) als nach unten offenes U-Profil, vorzugsweise mit vollständig geschlossener Oberseite, ausgebildet ist.

8. Sitzwanne (9) nach einem der vorhergehenden Ansprüche, **dadurch gekennzeichnet, dass** zwischen dem Umfangsprofil (16) und dem hinteren Querprofil (17) eine Fachwerkstruktur aus Längsprofilen (18) und Querprofilen (19) ausgebildet ist, zwischen denen Durchgangslöcher (22) ausgebildet sind.

9. Sitzwanne (9) nach einem der vorherigen Ansprüche, **dadurch gekennzeichnet, dass** die Profile (16, 17, 18, 19) ausgebildet sind jeweils als eins der folgenden Profile:
I-Profil (Doppel-T-Profil), T-Profil, Z-Profil, L-Profil, T-Profil, V-Profil.

10. Sitzwanne (9) nach einem der vorherigen Ansprüche, **dadurch gekennzeichnet, dass** die Profile (16, 17, 18, 19) eine verbreiterte, abgeflachte Oberseite zur Aufnahme eines aufgelegten Stizpolsters aufweisen.

11. Sitzwanne (9) nach einem der vorherigen Ansprüche, **dadurch gekennzeichnet, dass** zwischen dem Umfangsprofil (16) und dem Querprofil (17) mindestens ein, insbesondere mehrere biegeweiche Bereiche (40) ausgebildet sind, zur Ausbildung einer Verformbarkeit der Profilstruktur mit dem sich bei einem Front-Crash nach vorne oder unten und vorne durchbiegenden Querträger (6a) des Sitzgestells (4).

12. Sitzwanne (9) nach Anspruch 11, **dadurch gekennzeichnet, dass** der mindestens eine biegeweiche Bereich (40) durch Materialschwächung, insbesondere durch geringere vertikale Höhe seiner Profile (19) ausgebildet ist.

13. Sitzwanne (9) nach Anspruch 11 oder 12, **dadurch gekennzeichnet, dass** der mindestens eine biegeweiche Bereich (40) durch einen biegeweichen Profilquerschnitt seiner Profile (19), insbesondere durch ein V-Profil oder liegendes I-Profil, ausgebildet ist.

14. Sitzteil-Anordnung (8, 108) zum Aufsetzen auf ein Sitzgestell (4) eines Fahrzeugsitzes,
wobei die Sitzteil-Anordnung (8, 108) eine Sitzwanne (9) nach einem der vorherigen Ansprüche, eine hintere Unterfederungs-Befestigung (10) und zwischen der Sitzwanne (9) und der hinteren Unterfederungs-Befestigung (10) angebrachte, in Längsrichtung verlaufende Unterfederungs-Federn (11) aufweist, die durch Querverbindungen (14), insbesondere Federhalter (14) zueinander beabstandet sind.

15. Sitzteil-Anordnung (8) nach Anspruch 14, **dadurch gekennzeichnet, dass** die Sitzwanne (9) und die hintere Unterfederungs-Befestigung (10) getrennt voneinander ausgebildet sind, wobei die Sitzwanne (9) zur festen Befestigung an dem Sitzgestell (4) ausgebildet ist.

16. Sitzteil-Anordnung (108) nach Anspruch 14, **dadurch gekennzeichnet, dass** die Sitzwanne (9) und die Unterfederungs-Befestigung (10) starr miteinander verbunden oder einteilig, vorzugsweise einteilig als Spritzgussteil aus Kunststoff-Material, ausgebildet sind, wobei die Sitzwanne (9) gegenüber dem Sitzgestell (4) verstellbar, insbesondere schwenkbar, ist.

17. Fahrzeugsitz (1), der mindestens aufweist:
ein Sitzgestell (4),
eine Sitzteil-Anordnung (8, 108) nach einem der Ansprüche 14 bis 16,
wobei die Sitzwanne (9) auf ein Querrohr (6a) des Sitzgestells (4) aufgesetzt, vorzugsweise durch eine Sicherung (41) formschlüssig gesichert ist.

18. Fahrzeugsitz nach Anspruch 17, **dadurch gekennzeichnet, dass** die Unterfederungs-Befestigung (10) auf ein hinteres Querrohr (6b) des Sitzgestells (6) aufgesetzt und eingerastet ist.

19. Fahrzeugsitz nach Anspruch 17 oder 18, **dadurch gekennzeichnet, dass** die Sitzwanne (9) gegenüber dem Sitzgestell (4) durch eine motorische oder manuelle Schwenkeinrichtung (109) verstellbar, insbesondere höhenverstellbar und/oder schwenkbar ist.

## Claims

1. Seat pan (9) for fastening to a seat frame (4) of a vehicle seat (1), wherein the seat pan (9) comprises a profile structure made of a plurality of profiles (16, 17, 18, 19), wherein the seat pan (9), on its underside, comprises cross member mountings (24) for placing on a cross member (6a) extending in the transverse direction (Y),
**characterised in that**
between the profiles (16, 17, 18, 19) through-holes (22) are formed which extend in the vertical direction through the profile structure and
the seat pan (9) has a rear transverse profile (17) on which front spring attachments (12) are formed to mount underframe springs (11).

2. Seat pan (9) according to claim 1, **characterised in that** it is injected moulded from a plastic material.

3. Seat pan (9) according to claim 1 or 2, **characterised in that** between all profiles (16, 17, 18, 10), through-holes (22) are formed which extend in the vertical direction through the profile structure.

4. Seat pan (9) according to claim 3, **characterised in that** the profile structure is formed exclusively of profiles (16, 17, 18, 19) and through-holes formed between the profiles.

5. Seat pan (9) according to any one of the preceding claims, **characterised in that** the cross member mountings are pipe mountings (24) for mounting a transverse pipe (6a) of a seat frame (4) extending in the transverse direction, wherein the pipe mountings (24) are formed so as to open downwards, preferably open in a jaw-like manner, to be placed on the transverse pipe (6a).

6. Seat pan (9) according to claim 5, **characterised in that** the pipe mountings (24) are formed for snap-in or clip-in fastening on the front transverse pipe (6a).

7. Seat pan (9) according to any one of the preceding claims, **characterised in that** a circumferential profile (16) surrounds the seat pan (9) on three sides and is formed to be placed on side profiles (6c, 6d) of the seat frame (4), wherein the circumferential profile (16) is formed as a U profile open downwards, preferably with completely closed upper side.

8. Seat pan (9) according to any one of the preceding claims, **characterised in that** between the circumferential profile (16) and the rear transverse profile (17) a framework structure made of longitudinal profiles (18) and transverse profiles (19) is formed between which through-holes (22) are formed.

9. Seat pan (9) according to any one of the preceding claims, **characterised in that** the profiles (16, 71, 18, 19) are formed in each case as one of the following profiles:
I profile (double T profile), T profile, Z profile, L profile, T profile, V profile.

10. Seat pan (9) according to any one of the preceding claims, **characterised in that** the profiles (16, 17, 18, 19) have a widened, flattened upper side to mount a fitted seat cushion.

11. Seat pan (9) according to any one of the preceding claims, **characterised in that** between the circumferential profile (16) and the transverse profile (17), at least one, in particular a plurality of flexible regions (40) are formed to form a deformability of the profile structure with the cross member (6a) of the seat frame (4) deflected forwards or downwards and forwards in the event of a frontal crash.

12. Seat pan (9) according to claim 11, **characterised in that** the at least one flexible region (40) is formed by material weakening, in particular by shorter vertical height of its profiles (19).

13. Seat pan (9) according to claim 11 or 12, **characterised in that** the at least one flexible region (40) is formed by a flexible profile cross-section of its profiles (19), in particular by a V profile or horizontal I profile.

14. Seat part arrangement (8, 108) for placing on a seat frame (4) of a vehicle seat,
wherein the seat part arrangement (8, 108) comprises a seat pan (9) according to any one of the preceding claims, a rear underframe fastening (10) and underframe springs (11) arranged between the seat pan (9) and the rear underframe fastening (10) and running in the longitudinal direction which are spaced apart from one another by transverse connections (14), in particular spring holders (14).

15. Seat part arrangement (8) according to claim 14, **characterised in that** the seat pan (9) and the rear underframe fastening (10) are formed separately to one another, wherein the seat pan (9) is formed on the seat frame (4) for fixed fastening.

16. Seat part arrangement (108) according to claim 14, **characterised in that** the seat pan (9) and the underframe fastening (10) are formed rigidly connected to one another or in one piece, preferably in one piece as an injection moulded part made of plastic material, wherein the seat pan (9) is adjustable, in particular pivotable with respect to the seat frame (4).

17. Vehicle seat (1) which comprises at least:
a seat frame (4),
a seat part arrangement (8, 108) according to any one of claims 14 to 16,
wherein the seat pan (9) is placed on a transverse pipe (6a) of the seat frame (4), preferably secured in a form fitting manner by a securing means (41).

18. Vehicle seat according to claim 17, **characterised in that** the underframe fastening (10) is placed and snapped onto a rear transverse pipe (6b) of the seat frame (6).

19. Vehicle seat according to claim 17 or 18, **characterised in that** the seat pan (9) is adjustable, in particular height-adjustable and/or pivotable with respect to the seat frame (4) by a motorised or manual pivot device (109).

## Revendications

1. Carter de siège (9) destiné à être fixé sur un châssis de siège (4) d'un siège de véhicule (1), le carter de siège (9) présentant une structure de profilés comportant plusieurs profilés (16, 17, 18, 19),
le carter de siège (9) présentant sur sa face inférieure des parties de réception de traverse (24) destinées à être posées sur une traverse (6a) s'étendant dans le sens transversal (Y),
**caractérisé en ce que**
des trous traversants (22), qui s'étendent dans le sens vertical à travers la structure de profilés, sont formés entre les profilés (16, 17, 18, 19), et **en ce que** le carter de siège (9) présente un profilé transversal arrière (17), sur lequel sont formés des attaches de ressorts (12) destinées à recevoir des ressorts de suspension (11).

2. Carter de siège (9) suivant la revendication 1, **caractérisé en ce qu'**il est moulé par injection en une matière plastique.

3. Carter de siège (9) suivant la revendication 1 ou 2, **caractérisé en ce que** des trous traversants (22), qui s'étendent dans le sens vertical à travers la structure de profilés, sont formés entre tous les profilés (16, 17, 18, 19).

4. Carter de siège (9) suivant la revendication 3, **caractérisé en ce que** la structure de profilés est formée uniquement par des profilés (16, 17, 18, 19) et des trous traversants (22) formés entre les profilés.

5. Carter de siège (9) suivant une des revendications précédentes, **caractérisé en ce que** les parties de réception de traverse sont des parties de réception de tube (24) destinées à recevoir un tube transversal (6a) du châssis de siège, tube transversal qui s'étend dans le sens transversal, les parties de réception de tube (24) étant conçues ouvertes vers le bas, de préférence ouvertes à la manière d'une mâchoire pour être emboîtées sur le tube transversal (6a).

6. Carter de siège (9) suivant la revendication 5, **caractérisé en ce que** les parties de réception de tube (24) sont formées sur le tube transversal avant (6a) pour une fixation par enclenchement ou clipsage.

7. Carter de siège (9) suivant une des revendications précédentes, **caractérisé en ce qu'**un profilé périphérique (16) entoure le carter de siège (9) sur trois côtés et est destiné à être posé sur des profilés latéraux (6c, 6d) du châssis de siège, le profilé périphérique (16) étant conçu comme profilé en U ouvert vers le bas, de préférence avec une face supérieure entièrement fermée.

8. Carter de siège (9) suivant une des revendications précédentes, **caractérisé en ce qu'**entre le profilé périphérique (16) et le profilé transversal arrière (17) est formée une structure en treillis comportant des profilés longitudinaux et des profilés transversaux, entre lesquels sont formés des trous traversants (22).

9. Carter de siège (9) suivant une des revendications précédentes, **caractérisé en ce que** les profilés (16, 17, 18, 19) sont respectivement formés comme un des profilés suivants : profilé en I (profilé en double T), profilé en T, profilé en Z, profilé en L, profilé en V.

10. Carter de siège (9) suivant une des revendications précédentes, **caractérisé en ce que** les profilés (16, 17, 18, 19) présentent une face supérieure élargie, aplatie, destinée à recevoir un coussin de siège posé.

11. Carter de siège (9) suivant une des revendications précédentes, **caractérisé en ce qu'**une, de préférence plusieurs zones souples en flexion (40) sont réalisées entre le profilé périphérique (16) et le profilé transversal (17) pour créer une déformabilité de la structure de profilés entraînant un fléchissement vers l'avant ou vers le bas et l'avant de la traverse (6a) du châssis de siège (4) en cas de choc frontal.

12. Carter de siège (9) suivant la revendication 11, **caractérisé en ce que** l'au moins une zone souple en flexion (40) est réalisée par amincissement de matière, en particulier par une faible hauteur verticale de ses profilés (19).

13. Carter de siège (9) suivant la revendication 11 ou 12, **caractérisé en ce que** l'au moins une zone souple en flexion (40) est réalisée par une section transversale souple en flexion de ses profilés (19), en particulier par un profilé en V ou un profilé en I couché.

14. Ensemble partie de siège (8, 108) destiné à être posé sur un châssis de siège (4) d'un siège de véhicule, l'ensemble partie de siège (8, 108) présentant un carter de siège (9) suivant une des revendications précédentes, un dispositif de fixation de suspension arrière (10) et des ressorts de suspension (11) disposés entre le carter de siège (9) et le dispositif de fixation de suspension arrière (10), ressorts de suspension qui s'étendent dans le sens longitudinal et qui sont écartés les uns des autres par des liaisons transversales (14), en particulier par des éléments de retenue de ressort (14).

15. Ensemble partie de siège (8) suivant la revendication 14, **caractérisé en ce que** le carter de siège (9) et le dispositif de fixation de suspension arrière (10) sont réalisés séparément l'un de l'autre, le carter de siège (9) étant conçu pour une fixation ferme sur le châssis de siège (4).

16. Ensemble partie de siège (8) suivant la revendication 14, **caractérisé en ce que** le carter de siège (9) et le dispositif de fixation de suspension (10) sont reliés entre eux de manière rigide ou conçus de manière à former une seule pièce, de préférence une seule pièce en matière plastique moulée par injection, le carter de siège (9) étant réglable, en particulier pivotable par rapport au châssis de siège (4).

17. Siège de véhicule (1) présentant au moins :
un châssis de siège (4),
un ensemble partie de siège (8, 108) suivant une des revendications 14 à 16,
le carter de siège (9) étant posé sur un tube transversal (6a) du châssis de siège (4), de préférence de manière qu'il soit retenu par un dispositif de sécurité (41) agissant par coopération de formes.

18. Siège de véhicule suivant la revendication 17, **caractérisé en ce que** le dispositif de fixation de suspension (10) est posé et enclenché sur un tube transversal arrière (6b) du châssis de siège (6).

19. Siège de véhicule suivant la revendication 17 ou 18, **caractérisé en ce que** le carter de siège (9) est réglable, de préférence réglable en hauteur et/ou pivotable par rapport au châssis de siège (4), par l'intermédiaire d'un dispositif de pivotement manuel ou motorisé (109).
